(19) Europäisches Patentamt
European Patent Office
Office européen des brevets

(11) EP 3 770 125 B1

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **20186541.7**

(22) Anmeldetag: **17.07.2020**

(51) Internationale Patentklassifikation (IPC):
***C03B 17/06*** $^{(2006.01)}$ ***C03B 7/098*** $^{(2006.01)}$

(52) Gemeinsame Patentklassifikation (CPC):
**C03B 17/06; C03B 7/098;** Y02P 40/57

(54) **VORRICHTUNG UND VERFAHREN ZUR HERSTELLUNG VON GLASBÄNDERN**

DEVICE AND METHOD FOR THE PRODUCTION OF GLASS STRIPS

DISPOSITIF ET PROCÉDÉ DE FABRICATION DE RUBANS DE VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2019 DE 102019120064**

(43) Veröffentlichungstag der Anmeldung:
**27.01.2021 Patentblatt 2021/04**

(73) Patentinhaber: **SCHOTT AG**
**55122 Mainz (DE)**

(72) Erfinder:
- **GLACKI, Alexander**
  **30173 Hannover (DE)**
- **BREITBACH, Christian**
  **64285 Darmstadt (DE)**
- **HUNNIUS, Holger**
  **55122 Mainz (DE)**
- **LANGE, Ulrich**
  **55122 Mainz (DE)**
- **MÜNCH, Wolfgang**
  **55270 Bubenheim (DE)**
- **RÖSEL, Gregor**
  **65462 Ginsheim-Gustavsburg (DE)**
- **WEGENER, Holger**
  **31061 Alfeld (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**DE-B1- 1 596 484**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 770 125 B1

## Beschreibung

Die Erfindung betrifft allgemein die Glasherstellung. Insbesondere betrifft die Erfindung eine Vorrichtung und ein Verfahren zur Herstellung von Glasbändern mit einer Dicke von bis zu 3000 μm (Mikrometern), bevorzugt von 15 bis 1100 μm, aus einer Glasschmelze, im Down-Draw-Verfahren.

Beim Down-Draw-Verfahren sorgt ein Ziehtank für eine Vergleichmäßigung der Glasverteilung bis zu einer Düsenöffnung, durch die das Glas mit Heißformgebungstemperatur austritt. Am Ziehtankausgang kann sich eine einfache Schlitzdüse befinden, im Ziehtank selbst bzw. im Ziehtankausgang kann sich zusätzlich auch ein separater Strömungswiderstand befinden, beispielsweise durch ein Blatt oder einen Schwertkörper. Alle Formgebungswerkzeuge bestehen bevorzugt aus Edelmetalllegierungen, bevorzugt mit einem hohen Platin-Anteil. Dadurch besitzt das Down-Draw-Verfahren eine hohe Flexibilität, weil nach dem Abstoppen des Prozesses ein Wechsel und anschließender Wiedereinsatz der Edelmetall-Werkzeuge möglich ist. Dies ist beispielsweise bei einem bei Overflow-Fusion-Verfahren eingesetzten Keramiktrog nicht wirtschaftlich, da die Auf- und Abtemperzeiten entsprechend hoch sind. So beträgt zum Beispiel der Anfahrprozess bei einem Overflow-Fusion-Verfahren mehr als eine Woche, hingegen bei einem Down-Draw-Verfahren weniger als einen Tag.

Zudem kann das gleiche Edelmetall-Werkzeug auch für mehrere Glasarten eingesetzt werden, die sich in ihren chemischen und physikalischen Eigenschaften stark unterscheiden, wie zum Beispiel bezüglich des Korrosionsverhalten, der Leitfähigkeit, Dichte, Viskositätskurve, Glasübergangstemperatur, Heißformgebungstemperatur usw. Das heißt, mit einem Down-Draw-Verfahren ist es auch einfach möglich, Glasarten flexibel umzuschmelzen, ohne dass ein Wechsel der Heißformgebungswerkzeuge notwendig ist.

Der DE 10 2004 007 560 B4 liegt die Aufgabe zugrunde, eine Vorrichtung sowie einen geeigneten Ziehtank zur Herstellung von dünnen Glasscheiben zur Verfügung zu stellen, die es erlaubt, ein Glasband herzustellen, das hohen Anforderungen bezüglich Dickenkonstanz und Planität genügt. Dies wird durch einen Ziehtank erreicht, der über die gesamte Breite mindestens zwei Abschnitte mit unterschiedlichem Flächenquerschnitt aufweist, wobei die Abschnitte derart dimensioniert sind, dass der Druckabfall in der Summe über dem von der Glasschmelze in beiden Abschnitten jeweils zurückgelegten Weg an jeder Stelle der Schlitzdüse konstant und gleich groß ist. Ferner wird in der DE 10 2004 007 560 B4 beschrieben, dass es vorteilhaft ist, den Ziehtank mit Heizelementen zu versehen, um eine optimale Temperaturverteilung einzustellen, wobei der Ziehtank nur indirekt beheizt ist.

Zudem wurde in der Vergangenheit versucht, die Glasscheibenqualität durch besondere Temperaturprofile quer zur Ziehrichtung im Bereich der Düse zu verbessern. Dazu wird zum Beispiel in der DE 100 64 977 C1 vorgeschlagen, Zulauf, Ziehtank und Düsensystem als geschlossenes System auszubilden, wobei der Zulauf ein kreisrundes Rohr mit symmetrischen Rohrabschnitten und der Ziehtank ein in vertikaler und Querrichtung segmentiertes Beheizungssystem aufweist und die Beheizung direkt oder indirekt als elektrische Beheizung ausgeführt sein kann.

DE1596484 B1 offenbart eine Vorrichtung zur Herstellung von dünnen Glasbändern, wobei die Wandung des Ziehtanks und dessen Düse unabhängig voneinander durch Stromfluß durch die Wandung direkt beheizt werden. Zusätzlich wird der Ziehtank auch durch Heizwicklungen indirekt beheizt. Weiterhin lehrt DE1596484 B1 auch ein Verfahren unter Nutzung dieser Vorrichtung.

Der Ziehtank ist ein komplexes Bauteil, in welchem die Glasverteilung, Homogenisierung und die Temperatur-Einstellung fein justiert werden muss, um die geometrischen Eigenschaften des zu produzierenden Glasbands zu optimieren, so dass Dickenschwankungen, Verwölbungen im Glasband und Glasfehler, wie insbesondere Schlieren usw., vermieden werden.

Der Erfindung liegt daher die Aufgabe zugrunde, eine Vorrichtung zur Herstellung von Glasbändern zur Verfügung zu stellen, die es erlaubt, Glasbänder herzustellen, die hohen Anforderungen in Bezug auf Formtreue des Glasbands und Glasqualität unter Vermeidung von Glasdefekten und in Bezug auf mechanische Stabilität zur Verlängerung der Standzeit genügt. Weiterhin soll ein entsprechend verbessertes, insbesondere besonders flexibles, Verfahren mit stabileren Prozessen und erhöhter Ausbeute angegeben werden.

Diese Aufgabe wird durch den Gegenstand des unabhängigen Anspruchs gelöst. Vorteilhafte Weiterbildungen sind in den abhängigen Ansprüchen angegeben.

Demgemäß sieht die Erfindung eine Vorrichtung zum Ziehen von Glasbändern, mit einer Dicke von gleich oder kleiner 3000 μm, bevorzugt von 15 bis 1100 μm, aus einer Glasschmelze vor, wobei die Vorrichtung einen Ziehtank umfasst, der eine untere langgezogene Düsenöffnung aufweist, durch welche die Glasschmelze nach unten austreten kann, sowie eine direkte Beheizungseinrichtung und eine indirekte Beheizungseinrichtung. Insbesondere sind zumindest eine direkte Beheizungseinrichtung und zumindest eine indirekte Beheizungseinrichtung im Bereich der Düsenöffnung vorgesehen.

Dabei umfasst die direkte Beheizungseinrichtung zumindest einen Heizkreis, mit welchem zumindest ein Bereich des Ziehtanks in Form zumindest einer ersten Heizzone beheizbar ist, wobei die direkte Beheizungseinrichtung für jeden Heizkreis eine Stromquelle umfasst, wobei jeder Heizkreis Anschlüsse aufweist, mit dem jeder Heizkreis an einer Wandung des Ziehtanks angeschlossen ist, so dass der Strom der Stromquelle jeweils durch zumindest einen

Teil der Wandung fließt und die Wandung beheizt und jeder Heizkreis der direkten Beheizung stromdurchflossene Teile der Wandung des Ziehtanks umfasst. Die direkte Beheizungseinrichtung umfasst mehrere Heizkreise, mit welchem zumindest ein Bereich des Ziehtanks in Form mehrerer erster Heizzonen beheizbar ist. Die indirekte Beheizungseinrichtung weist Heizelemente für zumindest eine zweite Heizzone, vorzugsweise für mehrere zweite Heizzonen auf.

So erzeugt die indirekte Beheizung des Ziehtanks eine Grundtemperatur und die direkte Beheizung des Ziehtanks die Zieltemperatur.

In bevorzugter Ausgestaltung umfasst die direkte Beheizungseinrichtung zumindest vier voneinander getrennt regelbare Heizkreise, mit welchen vier verschiedene Bereiche des Ziehtanks in Form von ersten Heizzonen beheizbar sind. Die direkte Beheizungseinrichtung umfasst für jeden der Heizkreise eine Stromquelle, wobei die Heizkreise Anschlüsse aufweisen, mit denen die Heizkreise an der Wandung des Ziehtanks angeschlossen sind, so dass der Strom der Stromquellen jeweils durch zumindest einen Teil der Wandung fließt und die Wandung beheizt und die Heizkreise der direkten Beheizung stromdurchflossene Teile der Wandung des Ziehtanks umfassen, insbesondere wobei die Heizkreise mit stromdurchflossenen Blechen des Ziehtanks gebildet sind.

Die indirekte Beheizungseinrichtung weist Heizelemente vorzugsweise für zumindest drei voneinander getrennt regelbare räumlich zueinander verschiedene zweite Heizzonen auf.

Die Glasbanddicke reagiert sehr empfindlich auf Temperaturabweichungen, daher ist für einen stabilen Produktionsprozess die Optimierung und Feinjustage der Temperatur der Glasschmelze im und am Ziehtank besonders wichtig.

Wird ein Beheizungssystem nur indirekt ausgeführt, das heißt, die Heizelemente sind um den Ziehtank angeordnet, ist die Temperatur-Steuerung träge und die Feineinstellung beziehungsweise Optimierung des Temperatur-Profils im Ziehtank quer und längs schwer möglich. Die Gradientenkontrolle und damit die bessere und schnellere Regelbarkeit zum Ausgleich von Inhomogenitäten der Strömung für die Erhöhung der Schmelzqualität und Einstellung des Dickenprofils ist schwierig. Zudem können Anfahr- und Abstoppprozesse nur langsam im trägen System durchgeführt werden.

Wird ein Beheizungssystem lediglich direkt ausgeführt, können bei zu hohen direkten Heizströmen elektrochemische Reaktionen zwischen Glasschmelze und Ziehtankblech gefördert werden, welches im Glas zur Blasenbildung und zur unerwünschten Partikelbildung aus dem Ziehtankblech führen kann. Weiterhin ist es bei einer allein direkten Beheizung des Bauteils nicht möglich, fein ortsaufgelöste Temperatur-Einstellungen umzusetzen, was die Beherrschbarkeit des Prozesses verhindert.

Durch die erfindungsgemäße spezielle Kombination mit der direkten Beheizungseinrichtung und der indirekten Beheizungseinrichtung können die Nachteile der jeweiligen Beheizungsart reduziert beziehungsweise gegenseitig kompensiert werden. So ist mit der direkten Beheizungseinrichtung eine schnelle Regelbarkeit der Glastemperatur um ± 0,5 K sowie ein schnelles Anfahren und Abstoppen des Prozesses möglich und zugleich können durch die indirekte Beheizungseinrichtung zu hohe Heizströme der direkten Beheizung und damit die unerwünschte Blasenbildung und Partikelbildung im Glas verhindert oder zumindest reduziert werden. Durch die Trennung in verschiedene erste und zweite Heizzonen kann der Liniendurchsatz der Glasschmelze, das heißt der Durchsatz der Glasschmelze pro Längeneinheit in Querrichtung, besser eingestellt werden.

Somit bietet die erfindungsgemäße Vorrichtung zur Herstellung von dünnen Glasbändern ein gegenüber dem Stand der Technik verbessertes Beheizungssystem mit einer besonders flexiblen Temperatur- und Durchsatzeinstellung im Ziehtank und gewährleistet damit die Herstellung von Glasbändern mit verbesserter Formtreue und Glasqualität.

Um die Regelbarkeit der indirekten Beheizungseinrichtung weiter zu verbessern, weist die indirekte Beheizungseinrichtung vorzugweise Heizelemente für fünf oder mehr voneinander getrennt regelbare zweite Heizzonen auf.

In vorteilhafter Ausgestaltung sind die ersten Heizzonen der direkten Beheizungseinrichtung und die zweiten Heizzonen der indirekten Beheizungseinrichtung vertikal und/oder horizontal verteilt um den und am Ziehtank angeordnet.

Durch die vertikale und/oder horizontale Verteilung in verschiedene Heizzonen können das Temperaturprofil und der Liniendurchsatz der Glasschmelze ortsaufgelöst optimal geregelt werden, was die Beherrschbarkeit und somit die Stabilität des Prozesses begünstigt. Somit wird beispielsweise auch ein Unterdruck im Ziehtank, der zu Verformungen bis hin zum Prozessausfall führen kann, verhindert.

Problematisch kann auch die Alterung des Materials des Ziehtanks, der Formgebungswerkzeuge oder anderer Bauteile bei langer Standzeit und bei hohen Temperaturen von mehr als 1200°C sein, wodurch beispielsweise durch ein Korngrößenwachstum in einem Bauteil selbst aus Edelmetall die Stabilität negativ beeinflusst werden kann. Diese Nachteile können durch die kombinierte direkte und indirekte Beheizungseinrichtung mit den vertikalen und/oder horizontalen Verteilungen in verschiedene Heizzonen vermieden werden.

Vorzugsweise sind die an die Bleche des Ziehtanks angelegten Heizströme für die direkte Beheizung kleiner als 2500 A, bevorzugt kleiner als 1000 A.

Durch Heizströme von kleiner als 2500 A, bevorzugt von kleiner als 1000 A, wird die Partikelbildung, insbesondere die Bildung von Edelmetall-Partikeln aus Edelmetall-Bauteilen, und die Blasenbildung im Glas reduziert.

Bevorzugt ist die indirekte Beheizungseinrichtung so ausgebildet, dass sie als Grundlast mehr als 50% zu der Gesamtleistung beiträgt.

Wenn die Wärmezufuhr über die indirekte Beheizungseinrichtung im Vergleich zu der der direkten Beheizungseinrichtung überwiegt, kann der Regelstrom der direkten Beheizung auf Stromstärken gebracht werden, die unter denen der für die Partikel- und Blasenbildung kritischen Stromstärken liegen.

Um die direkte Beheizungseinrichtung wärmetechnisch zu verbessern, umfasst der Ziehtank in vorteilhafter Ausgestaltung Flansche oder Manschetten als Anschlüsse für die Stromquellen zur direkten Beheizung.

Es wurde herausgefunden, dass die Dicke der stromdurchflossenen Bleche des Ziehtanks lokal angepasst vorteilhafterweise im Bereich von 0,5 bis 5 mm liegt, um die lokalen Stromdichten, das heißt den Wärmeeintrag als Funktion von Stromstärke und Leiterquerschnitt, optimal einzustellen. Durch die Anpassung der Materialstärken für die jeweilige Idealverteilung der Temperatur können bei eingestellten Stromstärken kritische Bereiche, wie lokale Hitzestellen, sogenannte Hot Spots, die bei direkter Beheizung an Knicken oder Flanschen des Ziehtanks entstehen können, reduziert und somit auch die Blasen- und Fremdpartikelbildung vermieden werden.

Dadurch, dass mehrere Temperatur-Messstellen durch Verschweißung formschlüssig mit dem Ziehtank verbunden sind, kann eine besonders schnelle und direkte Einstellbarkeit erfolgen.

In weiterer vorteilhafter Ausgestaltung sind zumindest zwei Temperatur-Messstellen vorgesehen, die Regel-Messstellen zur Regelung der Heizleistung der direkten Beheizungseinrichtung oder der indirekten Beheizungseinrichtung für eine Regelungseinrichtung zur Regelung der Heizleistung bilden.

Für eine besonders gleichmäßige Wärmeverteilung kann die indirekte Beheizungseinrichtung als Heizelemente Heizkacheln oder Mäanderheizer umfassen.

Als besonders vorteilhaft haben sich Heizelemente der indirekten Beheizungseinrichtung herausgestellt, die Platin, Edelstahl oder SiC als Widerstandsheizmaterial umfassen.

Zur Verhinderung einer Kriechverformung bei Bauteil-Belastung beispielsweise durch hohe Temperaturen und zur Erhöhung der Prozessstabilität und der Standzeit der Vorrichtung, ist in einer bevorzugten Ausführungsform vorgesehen, dass der Ziehtank Bleche mit zumindest einem feinkornstabilisierten Edelmetall oder einer feinkornstabilisierten Edelmetalllegierung umfasst. Als Metalle eignen sich besonders Platin und Platinlegierungen, insbesondere Pt, PtRh, PtAu, PtRhAu, PtIr und besonders bevorzugt sind Nanopartikel, wie $ZrO_2$-Partikel, enthalten.

Der Einsatz feinkornstabilisierter Edelmetalllegierungen ist bevorzugt um die Stabilität des Ziehtanks bei hoher Temperatur-Belastung und bei Langzeiteinsatz zu erhöhen. Feinkomstabilisierte Legierungen, gegebenenfalls unter Zugabe von Nanopartikeln, schmelzmetallurgisch oder pulvermetallurgisch hergestellte Edelmetalllegierungen aus $Pt_x$-$Rh_yAu_z$ (0%<=x<=100%, 0%<=y<=20%, 0%<=z<=20%) oder $Pt_uIr_v$-Legierungen (0%<=u<=100%, 0%<=v<=20%) sind besonders vorteilhaft zur Verringerung des Kriecheffektes bei Bauteil-Belastung durch hohe Temperaturen.

Lieferanten von diesen stabilisierten Materialien sind z.B. Umicore, Furuya, Heraeus, Tanaka mit jeweils eigenen Versionen dieser Materialien (Umicore z.B. PtRh10 FKS Rigilit, PtRh10 FKS Saeculit - Heraeus z.B. PtRh10 DPH oder DPH-A).

Hochkriechbeständige Edelmetalle wie reines Iridium sind weniger geeignet, da diese nicht oxidationsbeständig sind.

Mit der hier beschriebenen Anordnung ist generell, ohne Beschränkung auf die vorgenannten speziellen Legierungen ein Ziehen von Glasbändern aus Gläsern mit Formgebungstemperaturen oberhalb von 1100 °C möglich. Als Formgebungstemperatur wird dabei nach dieser Offenbarung eine Temperatur bezeichnet, bei der das Glas eine Viskosität von $10^4$ dPa·s aufweist.

Selbstverständlich können nicht nur die Bleche des Ziehtanks zumindest ein feinkornstabilisiertes Edelmetall oder eine feinkornstabilisierte Edelmetalllegierung umfassen, sondern auch andere Bauteile oder Werkzeuge der Vorrichtung.

Zur Vermeidung eines Unterdrucks im Ziehtank, der eine mechanische Verformung des Ziehtanks nach sich ziehen und zu inhomogenen Dicken des Glasbands und zu Glasfehlern führen kann, mündet ein dem Ziehtank vorgelagerter Zulauf vorzugsweise in ein Verteilerrohr des Ziehtanks, an welches sich ein Schacht anschließt, wobei der Schacht einen engeren Querschnitt hat als das Verteilerrohr und an seinem unteren Ende die Düsenöffnung aufweist.

Damit ist der Druckabfall in der Summe über dem von der Glasschmelze jeweils zurückgelegten Weg auch an jeder Stelle der Düsenöffnung konstant und gleich groß.

In einer bevorzugten Ausführungsform sind die Stromquellen der direkten Beheizungseinrichtung so am Ziehtank angeschlossen, dass zumindest drei erste Heizzonen gebildet werden, welche im oberen Teil des Ziehtanks quer zur Zugrichtung des Glasbands, das heißt insbesondere entlang der Längsrichtung der Düsenöffnung, verteilt sind, wobei eine der oberen ersten Heizzonen vorzugsweise mittig angeordnet ist, und wobei zumindest eine weitere erste Heizzone den unteren Teil des Ziehtanks mit der Düsenöffnung beheizt.

Durch diese Anordnung kann die Temperatur im Ziehtank bis zur Düsenöffnung lokal variabel, nämlich sowohl in horizontaler als auch in vertikaler Richtung, unterschiedlich geregelt und somit auch die Viskosität der Glasschmelze wunschgemäß eingestellt werden.

Zur weiteren Verbesserung der Temperaturregelung sind gemäß einer weiter bevorzugten Ausführungsform die Heizelemente der indirekten Beheizungseinrichtung für die zumindest drei voneinander getrennt regelbaren räumlich zueinander verschiedenen zweiten Heizzonen so angeordnet, dass die zweiten Heizzonen nebeneinander quer zur Zugrichtung des Glasbands, das heißt insbesondere entlang der Längsrichtung der Düsenöffnung, verteilt sind.

Folglich kann ein Glasband hergestellt werden, das hohen Anforderungen bezüglich Dickenkonstanz und Planität genügt.

Für eine verlängerte Verweildauer der Glasschmelze und für eine verbesserte Regelbarkeit der Temperatur zur Beeinflussung der Dickenverteilung (Längs- und Querverteilung) der Glasschmelze weist der Ziehtank der Vorrichtung vorzugsweise einen Leitkörper auf, der aus der Düsenöffnung des Ziehtanks nach unten herausragt, wobei der Leitkörper zu den Rändern der Düsenöffnung beabstandet gehaltert ist, so dass zwischen dem Leitkörper und den Rändern der Düsenöffnung zwei Düsenspalte gebildet werden . Dabei ist der Leitkörper bevorzugt beheizt, wobei der Leitkörper eigene getrennt regelbare Anschlüsse aufweist und wobei zumindest ein vom Ziehtank unabhängiger Heizkreis gebildet wird, wobei beispielsweise über einen Anschluss eine Erdung erfolgt.

Durch die vorgenannten baulichen Ausgestaltungen der Vorrichtung können höhere Ausbeuten von Glasbändern mit homogenen Dicken und verbesserter Oberflächenqualität erzielt werden, die auch die mechanische Stabilität und somit auch die Standzeiten verbessern.

Mit einer der Vorrichtungen, die vorstehend beschrieben wurden, kann bevorzugt ein Verfahren zur Herstellung von dünnen Glasbändern, insbesondere mit einer Dicke von gleich oder kleiner 3000 $\mu$m, durchgeführt werden, bei welchem die Glasschmelze dem Ziehtank über einen Zulauf zugeführt wird, und wobei die Glasschmelze aus der Düsenöffnung austritt und unter Bildung des Glasbands abgezogen wird, wobei der Ziehtank gleichzeitig sowohl mit der direkten Beheizungseinrichtung als auch mit der indirekten Beheizungseinrichtung beheizt wird.

Bei einem bevorzugten Verfahren wird die Glasschmelze durch den Zulauf zum Ziehtank in ein Verteilerrohr des Ziehtanks verteilt, an welches sich ein Schacht anschließt, wobei der Schacht einen engeren Querschnitt hat als das Verteilerrohr, wobei mittels des Temperaturverlaufs im Ziehtank ein entlang der Düsenöffnung gleichbleibender Liniendurchsatz der Glasschmelze, das heißt ein gleichbleibender Durchsatz pro Längeneinheit in Querrichtung der Glasschmelze, eingestellt wird.

Bei einem bevorzugten Verfahren wird mittels der direkten Beheizungseinrichtung und der indirekten Beheizungseinrichtung der Liniendurchsatz der Glasschmelze, das heißt der Durchsatz pro Längeneinheit in Querrichtung der Glasschmelze, durch die Temperatureinstellung und Temperaturverteilung der Glasschmelze im Ziehtank so geregelt wird, dass der Gesamtdurchsatz konstant bleibt.

Im runden Ziehtankeingang wird der Durchsatz als Funktion des Rohrdurchmessers und der Temperatur eingestellt. Die Temperatureinstellung des Ziehtanks darf bevorzugt nur die Längsverteilung des Liniendurchsatzes entlang des Auslaufes beeinflussen und nicht den Gesamtdurchsatz verändern.

Bei einem weiter bevorzugten Verfahren mit einer Vorrichtung, bei der der Ziehtank einen Schacht umfasst, in welchem ein Leitkörper angeordnet ist und der an seinem unteren Ende die Düsenöffnung aufweist, wird die Temperatur der Glasschmelze im Ziehtank vorzugsweise so eingestellt, dass mit deren temperaturabhängiger Viskosität $\eta$ folgende Beziehung erfüllt ist:

$$48\frac{\dot{v}}{B}\int_{H_L}\frac{\eta}{(D_S-D_L)^3}dz+12\frac{\dot{v}}{B}\int_{H_S}\frac{\eta}{D_S^3}dz>\rho\cdot g\cdot h-p_u$$

wobei v den Volumenstrom der Glasschmelze, B die Breite des Ziehtanks in Richtung entlang der Düsenöffnung, Ds die lokale Weite des Schachts, $D_L$ die lokale Dicke des Leitkörpers, $\rho$ die Dichte der Glasschmelze, *g* die Erdbeschleunigung, *h* die Höhe des Schachts und $p_u$ einen Druck von 2000 Pa bezeichnen.

Um möglichst breite Glasbänder mit gleichmäßigen Dicken herzustellen, wird ein Temperatur-Gradient im Ziehtank entlang der Düsenöffnung von deren Rändern bis zur Mitte der Düsenöffnung vorteilhafterweise von $T_{grad}=T_{mitte}-T_{rand}$= 0 bis 50 K, bevorzugt von $T_{grad}$= 20 bis 40 K, eingestellt.

Durch die vorgenannten Ausführungen des Verfahrens sowohl mit der direkten Beheizung als auch mit der indirekten Beheizung können flexibel besonders stabile Prozesse und somit höhere Ausbeuten von Glasbändern mit homogenen Dicken und verbesserter Oberflächenqualität erzielt werden. Dies erhöht auch die Wirtschaftlichkeit des Verfahrens.

Kurzbeschreibung der Figuren

Die Erfindung wird nachfolgend genauer und anhand der beigeschlossenen Figuren erläutert.

Fig. 1 ist eine Querschnittansicht durch einen Ziehtank mit einer direkten Beheizungseinrichtung, einer indirekten Beheizungseinrichtung und mit einem Leitkörper.

Fig. 2 zeigt schematisch einen Ausschnitt eines Ziehtanks mit einer direkten Beheizungseinrichtung im Querschnitt.

Fig. 3 zeigt schematisch einen Ausschnitt eines Ziehtanks mit einer indirekten Beheizungseinrichtung im Querschnitt.

Fig. 4 zeigt als Diagramm den Einfluss des Temperaturverlaufs am Ziehtankausgang auf das Dickenprofil und die Breite des Glasbands.

Fig. 5. ist eine perspektivische Ansicht eines Ziehtanks mit einem einzelnen Paar von Manschetten als Anschlüsse für Strom zur direkten Beheizung.

Fig. 6 zeigt eine Querschnittansicht eines Ziehtanks zur Verdeutlichung von Größen zur Berechnung des Druckabfalls im Ziehtank.

Ausführliche Beschreibung der Erfindung

Fig. 1 zeigt Teile einer Vorrichtung 1 zur Herstellung, insbesondere zum Ziehen, von Glasbändern 3, mit einer Dicke von gleich oder kleiner 3000 μm, bevorzugt von 15 bis 1100 μm, aus einer Glasschmelze 5. Die Vorrichtung 1 weist einen Ziehtank 7 zur Aufnahme einer Glasschmelze 5 auf, welcher an dessen unterem Ende eine langgezogene Düsenöffnung 9 aufweist, durch welche die Glasschmelze 5 nach unten austreten kann, sowie erfindungsgemäß kombiniert eine direkte Beheizungseinrichtung 2 und eine indirekte Beheizungseinrichtung 4.

Im Ziehtank 7 kann bevorzugt ein Leitkörper 11 angeordnet sein, der aus der Düsenöffnung 9 des Ziehtanks 7 nach unten herausragen kann. Der Leitkörper 11 ist vorzugsweise zu den Rändern 90, 92 der Düsenöffnung 9 beabstandet gehaltert, so dass zwischen dem Leitkörper 11 und den Rändern 90, 92 der Düsenöffnung 9 zwei Düsenspalte 94, 96 gebildet werden. Die Glasschmelze 5 tritt dadurch bevorzugt in zwei Teilströmen 50, 52 durch die Düsenspalte 94, 96 aus. Diese Teilströme 50, 52 können am Leitkörper 11 entlang nach unten laufen und sich am unteren Ende des aus der Düsenöffnung 9 bevorzugt herausragenden Teils 100 des Leitkörpers 11 vereinigen. Dieser Bereich, in dem sich die beiden Teilströme 50, 52 vereinigen und von dem aus das Glasband 3 durch Abziehen geformt wird, wird als Ziehzwiebel 15 bezeichnet. Beim Abziehen verringert sich die Dicke des Glasbands 3 durch das Ausziehen des Glases. Gleichzeitig wird das Glas mit steigender Entfernung von der Düsenöffnung 9 kälter und entsprechend viskoser, bis dieses erstarrt.

Allgemein ist es bevorzugt, wenn der Leitkörper 11 mindestens 30 mm, vorzugsweise mindestens 80 mm aus der Düsenöffnung 9 herausragt. Auf diese Weise wird eine gute Verteilung der Glasschmelze 5 auf dem Leitkörper 11 ermöglicht, so dass Dickenschwankungen im Glasband 3 unterdrückt werden.

Ohne Beschränkung auf ein spezielles Ausführungsbeispiel ist in einer Weiterbildung vorgesehen, dass der Leitkörper 11 innerhalb des Ziehtanks 7 eine größere Dicke aufweist, als an der Düsenöffnung 9. Die Verdickung ist aus mechanischen Gründen vorteilhaft, aber nicht zwingend.

Der Leitkörper 11 kann einen Widerstandskörper 101 und ein unter dem Widerstandskörper 101 angeordnetes Schwert oder Blatt 103 umfassen, wobei der Widerstandskörper 101 bevorzugt eine größere Breite als das Blatt 103 aufweist, um den Strömungsquerschnitt im Ziehtank 7 zu verengen.

Der Abstand von der Düsenöffnung 9 zur Unterkante des Strömungswiderstands, beziehungsweise des Widerstandskörpers 101, beträgt allgemein vorzugsweise mindestens 3 mm, bevorzugt mindestens 8 mm.

Nicht in Fig. 1 dargestellt, aber technisch auch denkbar ist es, den Leitkörper 11 zu beheizen, insbesondere über eigene getrennt regelbare Anschlüsse, wobei zumindest ein vom Ziehtank 7 unabhängiger separater Heizkreis gebildet wird und beispielsweise über einen Anschluss eine Erdung erfolgt.

Um das Glasband 3 abzuziehen, kann eine Zugvorrichtung 17 vorgesehen sein. Diese kann beispielsweise ein oder mehrere Paare angetriebener Rollen umfassen.

Fig. 1 zeigt von der direkten Beheizungseinrichtung 2 einen Heizkreis 206, der zwei Anschlüsse 26, 27 aufweist, mit denen der Heizkreis 206 an einer Wandung 700 des Ziehtanks 7 angeschlossen ist, so dass der Strom der Stromquelle 201 durch zumindest einen Teil der Wandung 700 fließt und die Wandung 700 beheizt, wodurch ein Bereich des Ziehtanks 7 in Form einer ersten Heizzone 34 beheizbar ist Bevorzugt weist die direkte Beheizungseinrichtung 2 zumindest vier voneinander getrennt regelbaren Heizkreisen 206, 207, 208, 209, mit welchen vier verschiedene Bereiche des Ziehtanks 7 in Form von ersten Heizzonen 34, 35, 36, 37 beheizbar sind, wie beispielsweise in Fig. 2 dargestellt.

Die direkte Beheizungseinrichtung 2 umfasst weiter für jeden der bevorzugt zumindest vier Heizkreise 206, 207, 208, 209 eine Stromquelle 201, 202, 203, 204, wobei die Heizkreise 206, 207, 208, 209 jeweils Anschlüsse 26, 27 aufweisen, mit denen die Heizkreise 206, 207, 208, 209 an der Wandung 700 des Ziehtanks 7 angeschlossen sind, so dass der Strom der Stromquellen 201, 202, 203, 204 jeweils durch zumindest einen Teil der Wandung 700 fließt und die Wandung 700 beheizt.

Die Heizströme eines Heizkreises betragen vorzugsweise weniger als 2500 A, insbesondere weniger als 1000 A. Es werden allerdings Stromquellen mit einer Mindestleistung von 200 A bevorzugt, um bei Nutzung der direkten Beheizung zur Temperatur-Nachregelung eine hinreichende Heizleistung bereitstellen zu können. Insbesondere werden

die Heizkreise 206, 207, 208, 209 der direkten Beheizung mit stromdurchflossenen Blechen 78 des Ziehtanks 7 gebildet. Günstige Dicken der Bleche 78 für eine direkte Beheizung liegen im Bereich von 0,5 bis 5 Millimetern.

Die Vorrichtung 1 umfasst erfindungsgemäß ergänzend zu der Beheizungseinrichtung 2 auch eine indirekte Beheizungseinrichtung 4, die Heizelemente für zumindest eine zweite Heizzone aufweist, wie in der Fig. 1 dargestellt. In besonders bevorzugten Ausgestaltungen weist die indirekte Beheizungseinrichtung 4 Heizelemente für zumindest drei bzw. für fünf oder mehr (Fig. 3) voneinander getrennt regelbare räumlich zueinander verschiedene zweite Heizzonen auf. Im Ausführungsbeispiel der Vorrichtung 1 nach Fig. 1 ist an der indirekten Beheizungseinrichtung 4 auch eine thermische Isolation 14 zur äußeren Umgebung angeordnet.

Wie in Fig. 1 schematisch dargestellt, sind zumindest zwei Temperatur-Messstellen 18, 19 vorgesehen, die Regel-Messstellen zur Regelung der Heizleistung der direkten Beheizungseinrichtung 2 und/oder der indirekten Beheizungseinrichtung 4 für eine Regelungseinrichtung 20 zur Regelung der Heizleistung bilden können. Wie durch die eingezeichneten Pfeile verdeutlicht, liest die Regelungseinrichtung 20 demgemäß die Sensorwerte der Temperatur-Messstellen 18, 19 aus und regelt die Heizleistung der Beheizungseinrichtungen 2, 4. Bei der direkten Beheizung wird dazu der Stromfluss eingestellt. Auch die indirekte Beheizungseinrichtung 4 umfasst vorzugsweise eine konduktive Beheizung, kann aber beispielsweise auch Brenner umfassen. Die Temperatur-Messstellen 18, 19 können für eine schnelle Rückkopplung der Temperaturänderungen formschlüssig mit dem Ziehtank 7 verbunden, insbesondere angeschweißt sein.

In Fig. 2 ist aus Gründen der besseren Übersichtlichkeit ein Ausschnitt eines Ziehtanks 7 mit einer direkten Beheizungseinrichtung 2 gezeigt mit bevorzugt zumindest vier voneinander getrennt regelbaren Heizkreisen 206, 207, 208, 209, mit welchen vier verschiedene Bereiche des Ziehtanks 7 in Form der ersten Heizzonen 34, 35, 36, 37 beheizbar sind. Die direkte Beheizungseinrichtung 2 nach Fig. 2 umfasst für jeden der Heizkreise 206, 207, 208, 209 eine zugeordnete Stromquelle 201, 202, 203, 204, jeweils mit den Anschlüsse 26, 27, mit denen die Heizkreise 206, 207, 208, 209 an der Wandung 700 des Ziehtanks 7 angeschlossen sind.

In vorteilhafter Ausgestaltung sind die ersten Heizzonen 34, 35, 36, 37 der direkten Beheizungseinrichtung 2 vertikal und horizontal verteilt am Ziehtank 7 angeordnet. Durch diese Anordnung kann die Temperatur im Ziehtank bis zur Düsenöffnung 9 lokal variabel unterschiedlich geregelt und somit auch die Viskosität der Glasschmelze 5 wunschgemäß eingestellt werden.

In einer besonders bevorzugten Ausführungsform der direkten Beheizungseinrichtung 2, die in Fig. 2 dargestellt ist, sind die Stromquellen 201, 202, 203, 204 so am Ziehtank 7 angeschlossen, dass zumindest drei erste Heizzonen 34, 35, 36 bevorzugt im oberen Teil des Ziehtanks 7 quer zur Zugrichtung des Glasbands 3, das heißt insbesondere entlang der Längsrichtung der Düsenöffnung 9, verteilt sind. Von diesen drei ersten Heizzonen 34, 35, 36 im oberen Teil des Ziehtanks 7 ist eine Heizzone 35 vorzugsweise mittig im Bereich eines Zulaufs 74 der Glasschmelze 5 in den Ziehtank 7 angeordnet und die anderen zwei Heizzonen 34, 36 liegen bevorzugt jeweils im Bereich eines dem Zulauf 74 nachgeordneten Verteilerrohrs 76 für die Glasschmelze 5. Wie in Fig. 2 dargestellt, beheizt vorteilhafterweise zumindest eine weitere erste Heizzone 37 den unteren Teil des Ziehtanks 7 mit der Düsenöffnung 9.

Fig. 3 zeigt aus Gründen der besseren Übersichtlichkeit einen Ausschnitt eines Ziehtanks 7 mit einer indirekten Beheizungseinrichtung 4.

Ohne Beschränkung auf die Ausführungsbeispiele ist in einer Ausführungsform der Erfindung vorgesehen, dass, wie in Fig. 3 dargestellt, die indirekte Beheizungseinrichtung 4 bevorzugt sechs Heizelemente 41, 42, 43, 44, 45, 46 für sechs getrennt regelbare zweite Heizzonen 61, 62, 63, 64, 65, 66 aufweist, wobei die zweiten Heizzonen 61, 62, 63, 64, 65, 66 der indirekten Beheizungseinrichtung 4 nebeneinander horizontal mit vertikaler Längserstreckung der Heizzonen 61, 62, 63, 64, 65, 66 am Ziehtank 7 verteilt angeordnet sein können, weiter bevorzugt quer zur Zugrichtung des Glasbands 5, das heißt insbesondere entlang der Längsrichtung der Düsenöffnung 9.

Dadurch, dass die Vorrichtung 1 zur Herstellung, insbesondere zum Ziehen, von Glasbändern 3 erfindungsgemäß zugleich eine direkte Beheizungseinrichtung 2 und eine indirekten Beheizungseinrichtung 4 aufweist, können das Temperaturprofil und der Liniendurchsatz der Glasschmelze 5, insbesondere durch die Trennung in verschiedene erste und zweite Heizzonen, ortsaufgelöst optimal eingestellt werden, was die Beherrschbarkeit und somit auch die Stabilität des mit dieser Vorrichtung durchgeführten Prozesses besonders fördert. Insbesondere kann mit der Regelung ein entlang der Düsenöffnung 9 möglichst gleichbleibender Liniendurchsatz angestrebt werden.

Da die Glasbanddicke sehr empfindlich auf Temperaturabweichungen reagiert, ist für einen stabilen Produktionsprozess die Optimierung und Feinjustage der Temperatur der Glasschmelze 5 besonders wichtig.

Fig. 4 zeigt als Diagramm den Einfluss des Temperaturverlaufs am Ziehtankausgang auf das Dickenprofil und die Breite des Glasbands 3.

Die Glasbänder 3 weisen einen zentralen Bereich 30 auf, entlang dem sich die Dicke des Glasbands 3 nicht oder nur wenig ändert, sowie randseitige Borten 31, 33. Der zentrale Bereich 30 bildet den sogenannten Qualitätsbereich, aus dem die zu fertigenden Glasprodukte hergestellt werden. Typischerweise werden die Borten 31, 33 abgetrennt und das Glas der Borten 31, 33 kann erneut eingeschmolzen und dem Ziehtank 7 zugeführt werden.

Um ein besonders breites Glasband 3 mit zugleich gleichmäßiger Dicke im nutzbaren Qualitätsbereich bzw.

im zentrale Bereich 30 zu erhalten, ist ein Temperatur-Gradient idealerweise von 40 K zwischen den Rändern 90, 92 der Düsenöffnung 9 und der Mitte der Düsenöffnung 9 einzustellen, wie in Fig. 4 durch die dünner gedruckte "mittlere" Linie der drei Linien gezeigt.

Ist die Mitte der Düsenöffnung 9 heißer, das heißt, beträgt der Temperatur-Gradient zum Beispiel 50K, nimmt der Liniendurchsatz der Glasschmelze 5 mittig zu, weshalb das Dickenprofil des Glasbands 3 eine W-Form annimmt, wie beispielsweise in der Fig. 4 durch die gestrichelte Linie angegeben.

Wird der Temperatur-Unterschied kleiner oder gleich 20K, wie in der Fig. 4 durch die durchgängig fett gedruckte Linie angegeben, verringert sich die Bandbreite des Glasbands 3 und das Dickenprofil wird "wannenförmig". Der nutzbare Qualitätsbereich bzw. der zentrale Bereich 30 sinkt dabei deutlich.

Um möglichst breite Glasbänder 3 mit Dickenkonstanz herzustellen, wird daher bevorzugt ein Temperatur-Gradient im Ziehtank 7 entlang der Düsenöffnung 9 von deren Rändern 90, 92 bis zur Mitte der Düsenöffnung 9, vorteilhafterweise von $T_{grad}=T_{mitte}-T_{rand}= 0$ bis 50 K, bevorzugt von $T_{grad}= 20$ bis 40 K, eingestellt.

Eine weitere Möglichkeit zur Einstellung oder Regelung der Dicke des Glasbands 3 durch die Einstellung der Temperatur erfolgt in vorteilhafter Ausgestaltung der Vorrichtung 1 mit einem Ziehtank 7, bei der der Ziehtank 7 Flansche oder Manschetten 28 als Anschlüsse 26, 27 für Strom zur direkten konduktiven Beheizung umfasst.

In Fig. 5 ist ein Ausschnitt einer bevorzugten Ausführungsform gezeigt, bei dem dem Ziehtank 7 ein Zulauf 74 für die Glasschmelze vorgelagert ist und bei dem der obere Teil des Ziehtanks 7 durch einen rohrförmigen Abschnitt beziehungsweise das Verteilerrohr 76 für die Glasschmelze 5 gebildet ist, an welches sich ein Schacht 75 anschließt. Dabei ist beispielsweise ein einzelnes Paar von Manschetten 28 als separate Anschlüsse 26, 27 für Strom an dem Verteilerrohr 76 befestigt. Die Manschetten 28 weisen dabei bevorzugt jeweils eine Stromanschluss-Lasche 29 auf.

Nach einer weiteren Ausführungsform der Erfindung wird zur Verbesserung der Formtreue des Glasbands 3 der Druckabfall im Ziehtank 7 in spezieller Weise eingestellt. Mit dieser Einstellung wird vermieden, dass sich ein Unterdruck im Ziehtank 7 ausbildet. Ein solcher Unterdruck kann den Ziehtank 7 mechanisch verformen, was sich auch auf die Glasdicke auswirken kann. Zudem kann ein lokaler Unterdruck zu instabilen Strömungen der Glasschmelze 5 im Ziehtank 7 führen, die ebenfalls inhomogene Glasdicken oder Glasfehler mit sich bringen können.

Anhand der schematischen Schnittansicht eines Ziehtanks 7 in Fig. 6 wird die Einstellung gemäß dieser Ausführungsform nun näher erläutert. Die Fig. 6 zeigt eine Querschnittansicht eines Ziehtanks 7, in der Abmessungen dargestellt sind, die zur Berechnung des Druckabfalls im Ziehtank 7 herangezogen werden.

Der obere Teil des Ziehtanks 7 wird hier durch einen rohrförmigen Abschnitt beziehungsweise das Verteilerrohr 76 gebildet, an welches sich ein Schacht 75 anschließt, der in einen Boden 70 des Ziehtanks 7 mündet. Der Schacht 75 hat bevorzugt einen engeren Querschnitt als das Verteilerrohr 76. Dementsprechend ist die Weite $D_A$ des Schachts 75 kleiner als der Durchmesser des Verteilerrohrs 76. Druckänderungen erfolgen aufgrund des kleinen Querschnitts vor allem entlang des Schachts 75. Besonders tragen die Abschnitte bei, in denen vorzugsweise zumindest ein Leitkörper 11 den Schacht 75 weiter verengt.

Gemäß einer bevorzugten Ausführungsform wird die Temperatur im Ziehtank 7 so eingestellt, dass die oben bereits genannte Beziehung gilt:

$$48\frac{\dot{v}}{B}\int_{H_L}\frac{\eta}{(D_S-D_L)^3}dz+12\frac{\dot{v}}{B}\int_{H_S}\frac{\eta}{D_S^3}dz>\rho\cdot g\cdot h-p_u$$

In der obigen Beziehung bezeichnet $\dot{v}$ den Volumenstrom der Glasschmelze 5, B die Breite des Ziehtanks 7 in Richtung entlang der Düsenöffnung 9, beziehungsweise entlang des Glasbands 3 senkrecht zur Zugrichtung, $\eta$ die Viskosität der Glasschmelze 5, $D_S$ die lokale Weite des Schachts 75, $D_L$ die lokale Dicke des Leitkörpers 11, $\rho$ die Dichte der Glasschmelze 5, *g* die Erdbeschleunigung und *h* die Höhe des Schachts 75. Die Integration erfolgt über die Abschnitte $H_L$ und Hs in vertikaler Richtung z. Dabei kann die Integration auch über zwei oder mehrere Teilabschnitte erfolgen, wobei die Teilintegrale dann zu addieren sind. Dies ist der Fall, wenn zusätzlich zu dem Leitkörper 11 noch weitere Leiterkörper vorhanden sind, die beispielsweise mit einem Abstand in vertikaler Richtung voneinander getrennt sind.

Das Symbol $p_u$ bezeichnet einen Druck in Höhe von 2000 Pa. Diese Größe berücksichtigt einen noch tolerierbaren Unterdruck. Auf der rechten Seite der Beziehung steht mithin der um den noch tolerierbaren Unterdruck $p_u$ verminderte hydrostatische Druck der Glasschmelze 5. Dieser Term ist eine Konstante. Der Vorfaktor $\dot{v}/B$ bestimmt die Dicke des Glasbands 3. Diese wird vorgegeben, so dass der Vorfaktor ebenfalls eine Konstante darstellt. Regelbar ist dagegen bei vorgegebener Dicke des Glasbands 3 über die Temperatur die stark temperaturabhängige Viskosität $\eta$.

Wie oben an den Ausgestaltungen der direkten Beheizungseinrichtung 2 und der indirekten Beheizungseinrichtung 4 gezeigt, kann die Temperaturregelung auch lokal unterschiedlich erfolgen. Ebenso kann die Temperatur im Ziehtank 7 auch entlang der vertikalen Richtung variieren. Die Viskosität kann also auch ortsabhängig sein, $\eta=\eta(z)$. Diese Abhängigkeit kann entsprechend bei der Integration ebenfalls berücksichtigt werden.

Gemäß einer Ausführungsform ist also vorgesehen, dass der Ziehtank 7 einen Schacht 75 umfasst, in welchem der Leitkörper 11 angeordnet ist und der an seinem unteren Ende die Düsenöffnung 9 aufweist, wobei die Temperatur der Glasschmelze 5 im Ziehtank 7 so eingestellt wird, dass mit deren temperaturabhängiger Viskosität die oben angegebene Beziehung erfüllt ist.

Es ist dem Fachmann ersichtlich, dass die Erfindung nicht auf die in den Figuren beschriebenen speziellen Ausführungsbeispiele beschränkt ist, sondern in vielfältiger Weise variiert werden kann.

Bezugszeichenliste

| | |
|---|---|
| 1 | Vorrichtung zur Herstellung von Glasbändern |
| 2 | direkte Beheizungseinrichtung |
| 3 | Glasband |
| 4 | indirekte Beheizungseinrichtung |
| 5 | Glasschmelze |
| 7 | Ziehtank |
| 9 | Düsenöffnung |
| 11 | Leitkörper |
| 14 | thermische Isolation |
| 15 | Ziehzwiebel |
| 17 | Zugvorrichtung |
| 18, 19 | Temperatur-Messstelle |
| 20 | Regelungseinrichtung zur Regelung der Heizleistung |
| 26, 27 | Anschlüsse für Heizkreis |
| 28 | Manschette |
| 29 | Stromanschluss-Lasche |
| 30 | zentraler Bereich von 3 |
| 31, 32 | Borten von 3 |
| 34, 35, 36, 37 | erste Heizzonen |
| 50, 52 | Teilströme von 5 |
| 41, 42, 43, 44, 45, 46 | Heizelemente der indirekten Beheizungseinrichtung 4 |
| 61, 62, 63, 64, 65, 66 | zweite Heizzonen |
| 70 | Boden von 7 |
| 74 | Zulauf zu 7 |
| 75 | Schacht |
| 76 | Verteilerrohr |
| 78 | Blech |
| 90, 92 | Ränder von 94, 96 |
| 94, 96 | Düsenspalte |
| 100 | aus 9 herausragender Teil von 11 |
| 101 | Widerstandskörper |
| 103 | Schwert oder Blatt |

(fortgesetzt)

| | |
|---|---|
| 201, 202, 203, 204 | Stromquelle |
| 206, 207, 208, 209 | Heizkreis |
| 700 | Wandung von 7 |

**Patentansprüche**

1. Vorrichtung (1) zur Herstellung von dünnen Glasbändern (3) mit einer Dicke von gleich oder kleiner 3000 μm, aus einer Glasschmelze (5) mit einem Ziehtank (7), wobei der Ziehtank (7) eine untere langgezogene Düsenöffnung (9) aufweist, durch welche die Glasschmelze (5) nach unten austreten kann, sowie eine direkte Beheizungseinrichtung (2) und eine indirekte Beheizungseinrichtung (4) aufweist, wobei die direkte Beheizungseinrichtung (2) zumindest einen Heizkreis (206, 207, 208, 209) umfasst, mit welchem zumindest ein Bereich des Ziehtanks (7) in Form zumindest einer ersten Heizzone (34, 35, 36, 37) beheizbar ist, wobei die direkte Beheizungseinrichtung (2) für jeden Heizkreis (206, 207, 208, 209) eine Stromquelle (201, 202, 203, 204) umfasst, wobei jeder Heizkreis (206, 207, 208, 209) Anschlüsse (26, 27) aufweist, mit dem jeder Heizkreis(206, 207, 208, 209) an einer Wandung (700) des Ziehtanks (7) angeschlossen ist, so dass der Strom der Stromquelle (201, 202, 203, 204) jeweils durch zumindest einen Teil der Wandung (700) fließt und die Wandung (700) beheizt und jeder Heizkreis (206, 207, 208, 209) der direkten Beheizung stromdurchflossene Teile der Wandung (700) des Ziehtanks (7) umfasst und wobei die indirekte Beheizungseinrichtung (4) Heizelemente (41, 42, 43, 44, 45, 46) für zumindest eine zweite Heizzone (61, 62, 63, 64, 65, 66) aufweist und wobei die direkte Beheizungseinrichtung (2) mehrere Heizkreise (206, 207, 208, 209) zur Bildung mehrerer erster Heizzonen (34, 35, 36, 37) aufweist, **dadurch gekennzeichnet, dass** mehrere Temperatur-Messstellen (18, 19) mit dem Ziehtank (7) verschweißt sind.

2. Vorrichtung (1) gemäß dem vorstehenden Anspruch, **dadurch gekennzeichnet, dass** die direkte Beheizungseinrichtung (2) zumindest vier voneinander getrennt regelbare Heizkreise (206, 207, 208, 209) umfasst, mit welchen vier verschiedene Bereiche des Ziehtanks (7) in Form von vier ersten Heizzonen (34, 35, 36, 37) beheizbar sind, wobei die direkte Beheizungseinrichtung (2) für jeden der vier Heizkreise Anschlüsse (26, 27) aufweist, mit denen die Heizkreise (206, 207, 208, 209) an der Wandung (700) des Ziehtanks (7) angeschlossen sind.

3. Vorrichtung (1) gemäß einem der vorstehenden Ansprüche, **dadurch gekennzeichnet, dass** die indirekte Beheizungseinrichtung (4) Heizelemente (41, 42, 43, 44, 45, 46) für zumindest drei, bevorzugt für zumindest fünf oder mehr voneinander getrennt regelbare räumlich zueinander verschiedene zweite Heizzonen (61, 62, 63, 64, 65, 66) aufweist.

4. Vorrichtung (1) gemäß dem vorstehenden Anspruch, **dadurch gekennzeichnet, dass** die ersten Heizzonen (34, 35, 36, 37) der direkten Beheizungseinrichtung (2) und die zweiten Heizzonen (61, 62, 63, 64, 65, 66) der indirekten Beheizungseinrichtung (4) vertikal und/oder horizontal verteilt um den und am Ziehtank (7) angeordnet sind.

5. Vorrichtung (1) gemäß einem der vorstehenden Ansprüche, **dadurch gekennzeichnet, dass** die an Bleche (78) des Ziehtanks (7) angelegten Heizströme für die direkte Beheizung kleiner als 2500 A sind, bevorzugt kleiner als 1000 A sind und/oder dass die indirekte Beheizungseinrichtung (4) so ausgebildet ist, dass sie als Grundlast mehr als 50% zu der Gesamtleistung beiträgt.

6. Vorrichtung (1) gemäß einem der vorstehenden Ansprüche, **dadurch gekennzeichnet, dass** der Ziehtank (7) Flansche oder Manschetten (28) als Anschlüsse (26, 27) für Strom zur direkten Beheizung umfasst.

7. Vorrichtung (1) gemäß einem der vorstehenden Ansprüche, **dadurch gekennzeichnet, dass** zumindest zwei Temperatur-Messstellen (18, 19) vorgesehen sind, die Regel-Messstellen zur Regelung der Heizleistung der direkten Beheizungseinrichtung (2) oder der indirekten Beheizungseinrichtung (4) für eine Regelungseinrichtung (20) zur Regelung der Heizleistung bilden.

8. Vorrichtung (1) gemäß einem der vorstehenden Ansprüche, **dadurch gekennzeichnet, dass** die Heizelemente (41, 42, 43, 44, 45, 46) der indirekten Beheizungseinrichtung (4) Platin, Edelstahl oder SiC als Widerstandsheizmaterial umfassen und/oder Heizkacheln oder Mäanderheizer umfassen.

**9.** Vorrichtung (1) gemäß einem der vorstehenden Ansprüche, **dadurch gekennzeichnet, dass** der Ziehtank (7) Bleche (78) mit zumindest einem feinkornstabilisierten Edelmetall oder einer feinkornstabilisierten Edelmetalllegierung umfasst und wobei das feinkornstabilisierte Edelmetall bevorzugt zumindest eines der Merkmale

- das feinkornstabilisierte Edelmetall ist eines der Metalle Pt, PtRh, PtAu, PtRhAu, PtIr,
- das feinkornstabilisierte Edelmetall enthält Nanopartikel, wie $ZrO_2$-Partikel aufweist.

**10.** Vorrichtung (1) gemäß einem der vorstehenden Ansprüche, **dadurch gekennzeichnet, dass** dem Ziehtank (7) ein Zulauf (74) vorgelagert ist und wobei der Zulauf (74) in ein Verteilerrohr (76) des Ziehtanks (7) mündet, an welches sich ein Schacht (75) anschließt, wobei der Schacht (75) einen engeren Querschnitt hat als das Verteilerrohr (76) und an seinem unteren Ende die Düsenöffnung (9) aufweist.

**11.** Vorrichtung gemäß einem der vorstehenden Ansprüche, **dadurch gekennzeichnet, dass** die Stromquellen (201, 202, 203, 204) so am Ziehtank (7) angeschlossen sind, dass zumindest drei erste Heizzonen (34, 35, 36) gebildet werden, welche im oberen Teil des Ziehtanks (7) quer zur Zugrichtung des Glasbands (3) verteilt sind, wobei eine der ersten Heizzonen (35) vorzugsweise mittig angeordnet ist, und wobei eine weitere erste Heizzone (37) den unteren Teil des Ziehtanks (7) mit der Düsenöffnung (9) beheizt.

**12.** Vorrichtung gemäß einem der vorstehenden Ansprüche, **dadurch gekennzeichnet, dass** der Ziehtank (7) einen Leitkörper (11) aufweist, der aus der Düsenöffnung (9) des Ziehtanks (7) nach unten herausragt, wobei der Leitkörper (11) zu den Rändern (90, 92) der Düsenöffnung (9) beabstandet gehaltert ist, so dass zwischen dem Leitkörper (11) und den Rändern (90, 92) der Düsenöffnung (9) zwei Düsenspalte (94, 96) gebildet werden, und wobei der Leitkörper (11) beheizt ist, wobei der Leitkörper (11) eigene getrennt regelbare Anschlüsse aufweist und wobei zumindest ein vom Ziehtank (7) unabhängiger Heizkreis gebildet wird.

**13.** Verfahren zur Herstellung von dünnen Glasbändern (3) mit einer Dicke von gleich oder kleiner 3000 $\mu$m, mit einer Vorrichtung (1) nach einem der vorstehenden Ansprüche, bei welchem die Glasschmelze (5) dem Ziehtank (7) über einen Zulauf (74) zugeführt wird, und wobei die Glasschmelze (5) aus der Düsenöffnung (9) austritt und unter Bildung des Glasbands (3) abgezogen wird, wobei der Ziehtank (7) gleichzeitig sowohl mit der direkten Beheizungseinrichtung (2) als auch mit der indirekten Beheizungseinrichtung (4) beheizt wird.

**14.** Verfahren gemäß dem vorstehenden Anspruch, **dadurch gekennzeichnet, dass** die Glasschmelze (5) durch den Zulauf (74) zum Ziehtank (7) in ein Verteilerrohr (76) des Ziehtanks (7) verteilt wird, an welches sich ein Schacht (75) anschließt, wobei der Schacht (75) einen engeren Querschnitt hat als das Verteilerrohr (76), wobei mittels des Temperaturverlaufs im Ziehtank (7) ein entlang der Düsenöffnung (9) gleichbleibender Liniendurchsatz der Glasschmelze (5) eingestellt wird.

**15.** Verfahren gemäß einem der vorstehenden Ansprüche, **dadurch gekennzeichnet, dass** der Ziehtank (7) einen Schacht (75) umfasst, in welchem ein Leitkörper (11) angeordnet ist und der an seinem unteren Ende die Düsenöffnung (9) aufweist, wobei die Temperatur der Glasschmelze (5) im Ziehtank (7) so eingestellt wird, dass mit deren temperaturabhängiger Viskosität $\eta$ folgende Beziehung erfüllt ist:

$$48\frac{\dot{v}}{B}\int_{H_L}\frac{\eta}{(D_S-D_L)^3}dz+12\frac{\dot{v}}{B}\int_{H_S}\frac{\eta}{D_S^3}dz>\rho\cdot g\cdot h-p_u$$

wobei v den Volumenstrom der Glasschmelze, B die Breite des Ziehtanks (7) in Richtung entlang der Düsenöffnung (9), Ds die lokale Weite des Schachts (75), $D_L$ die lokale Dicke des Leitkörpers (11), $\rho$ die Dichte der Glasschmelze, *g* die Erdbeschleunigung, *h* die Höhe des Schachts (75) und $p_u$ einen Druck von 2000 Pa bezeichnen.

**16.** Verfahren gemäß einem der vorstehenden Ansprüche, **dadurch gekennzeichnet, dass** ein Temperatur-Gradient im Ziehtank (7) entlang der Düsenöffnung (9) von deren Rändern (90, 92) bis zur Mitte der Düsenöffnung (9) von $T_{grad}=T_{mitte}-T_{rand}=$ 0 bis 50 K, bevorzugt von $T_{grad}$=20 bis 40 K, eingestellt wird.

## Claims

1. An apparatus (1) for producing thin glass ribbons (3) with a thickness of equal to or less than 3000 μm from a molten glass (5), comprising a drawing tank (7), wherein said drawing tank (7) has a lower elongated nozzle opening (9) through which the molten glass (5) can exit downwards, and comprises direct heating means (2) and indirect heating means (4), the direct heating means (2) comprising at least one heating circuit (206, 207, 208, 209) that is operable to heat at least one area of the drawing tank (7) in the form of at least one first heating zone (34, 35, 36, 37), wherein the direct heating means (2) comprise a respective power source (201, 202, 203, 204) for each heating circuit (206, 207, 208, 209), wherein each heating circuit (206, 207, 208, 209) has connections (26, 27) through which each heating circuit (206, 207, 208, 209) is connected to a wall (700) of the drawing tank (7) so that the current from each power source (201, 202, 203, 204) flows through at least a portion of the wall (700) and heats the wall (700); and wherein each heating circuit (206, 207, 208, 209) of the direct heating means comprises current-carrying portions of the wall (700) of the drawing tank (7); and wherein the indirect heating means (4) comprise heating elements (41, 42, 43, 44, 45, 46) for at least one second heating zone (61, 62, 63, 64, 65, 66); and wherein the direct heating means (2) comprise a plurality of heating circuits (206, 207, 208, 209) to provide a plurality of first heating zones (34, 35, 36, 37); **characterised in that** a plurality of temperature measurement points (18, 19) are welded to the drawing tank (7).

2. The apparatus (1) according to the preceding claim, **characterised in that** the direct heating means (2) comprise at least four separately controllable heating circuits (206, 207, 208, 209) which are operable to heat four different areas of the drawing tank (7) in the form of four first heating zones (34, 35, 36, 37), wherein the direct heating means (2) comprise connections (26, 27) for each of the four heating circuits, through which the heating circuits (206, 207, 208, 209) are connected to the wall (700) of the drawing tank (7).

3. The apparatus (1) according to any one of the preceding claims, **characterised in that** the indirect heating means (4) comprise heating elements (41, 42, 43, 44, 45, 46) for at least three, preferably for at least five or more separately controllable, locally distinct second heating zones (61, 62, 63, 64, 65, 66).

4. The apparatus (1) according to the preceding claim, **characterised in that** the first heating zones (34, 35, 36, 37) of the direct heating means (2) and the second heating zones (61, 62, 63, 64, 65, 66) of the indirect heating means (4) are arranged around and on the drawing tank (7) in a vertically and/or horizontally distributed manner.

5. The apparatus (1) according to any one of the preceding claims, **characterised in that** heating currents applied to metal sheets (78) of the drawing tank (7) for direct heating are less than 2500 A, preferably less than 1000 A; and/or that the indirect heating means (4) are designed so as to contribute more than 50 % of the total power output, as a base load.

6. The apparatus (1) according to any one of the preceding claims, **characterised in that** the drawing tank (7) comprises flanges or collars (28) as the power connections (26, 27) for direct heating.

7. The apparatus (1) according to any one of the preceding claims, **characterised in that** at least two temperature measurement points (18, 19) are provided, which define feedback control measurement points for regulating the heating power of the direct heating means (2) or of the indirect heating means (4) for a feedback control unit (20) for controlling the heating power output.

8. The apparatus (1) according to any one of the preceding claims, **characterised in that** the heating elements (41, 42, 43, 44, 45, 46) of the indirect heating means (4) comprise platinum, stainless steel, or SiC as a resistance heating material; and/or comprise heating tiles or meandering heaters.

9. The apparatus (1) according to any one of the preceding claims, **characterised in that** the drawing tank (7) comprises metal sheets (78) including at least one fine grain stabilized noble metal or one fine grain stabilized noble metal alloy; and wherein said fine grain stabilized noble metal preferably comprises at least one of the following features:

   - the fine grain stabilized noble metal is one of metals Pt, PtRh, PtAu, PtRhAu, PtIr;
   - the fine grain stabilized noble metal contains nanoparticles such as $ZrO_2$ particles.

10. The apparatus (1) according to any one of the preceding claims, **characterised by** an inlet (74) upstream of the drawing tank (7), and wherein said inlet (74) opens into a manifold pipe (76) of the drawing tank (7) which opens

into a shaft (75), wherein said shaft (75) is of a smaller cross section than the manifold pipe (76) and has the nozzle opening (9) at its lower end.

**11.** The apparatus according to any one of the preceding claims, **characterised in that** the power sources (201, 202, 203, 204) are connected to the drawing tank (7) such that at least three first heating zones (34, 35, 36) are defined, which are distributed in the upper portion of the drawing tank (7) transversely to the drawing direction of the glass ribbon (3), wherein one of the first heating zones (35) is preferably arranged centrally and wherein a further first heating zone (37) heats the lower portion of the drawing tank (7) including the nozzle opening (9).

**12.** The apparatus according to any one of the preceding claims, **characterised in that** the drawing tank (7) comprises a guiding body (11) which protrudes downward and out of the nozzle opening (9) of the drawing tank (7), wherein the guiding body (11) is supported so as to be spaced apart from the edges (90, 92) of the nozzle opening (9) so that two nozzle slots (94, 96) are defined between the guiding body (11) and the edges (90, 92) of the nozzle opening (9); and wherein the guiding body (11) is heated, wherein the guiding body (11) has its own separately controllable connections and wherein at least one heating circuit is provided, which is independent of the drawing tank (7).

**13.** A method for producing thin glass ribbons (3) that have a thickness of equal to or less than 3000 $\mu$m using an apparatus (1) according to any one of the preceding claims, wherein the molten glass (5) is fed into the drawing tank (7) via an inlet (74), and wherein the molten glass (5) emerges from the nozzle opening (9) and is drawn off to form the glass ribbon (3), wherein the drawing tank (7) is heated simultaneously by the direct heating means (2) and also by the indirect heating means (4).

**14.** The method according to the preceding claim, **characterised in that** the molten glass (5) is distributed via the inlet (74) to the drawing tank (7) and into a manifold pipe (76) of the drawing tank (7) which opens into a downstream shaft (75), wherein said shaft (75) is of a smaller cross section than the manifold pipe (76), wherein a consistent linear throughput of molten glass (5) along the nozzle opening (9) is adjusted through the temperature profile in the drawing tank (7).

**15.** The method according to any one of the preceding claims, **characterised in that** the drawing tank (7) comprises a shaft (75) in which a guiding body (11) is arranged and which has the nozzle opening (9) at its lower end, wherein the temperature of the molten glass (5) in the drawing tank (7) is adjusted such that with the temperature-dependent viscosity $\eta$ thereof the following relationship is fulfilled:

$$48\frac{\dot{v}}{B}\int_{H_L}\frac{\eta}{(D_S-D_L)^3}dz+12\frac{\dot{v}}{B}\int_{H_S}\frac{\eta}{D_S^3}dz>\rho\cdot g\cdot h-p_u$$

wherein $\dot{v}$ is the volume flow of the molten glass, $B$ is the width of the drawing tank (7) in the direction along the nozzle opening (9), $D_S$ is the local width of the shaft (75), $D_L$ is the local thickness of the guiding body (11), $\rho$ is the density of the molten glass, g is the gravitational acceleration, $h$ is the height of the shaft (75), and $p_u$ is a pressure of 2000 Pa.

**16.** The method according to any one of the preceding claims, **characterised in that** a temperature gradient of $T_{grad} = T_{centre} - T_{edge}$ = 0 to 50 K, preferably $T_{grad}$ = 20 to 40 K is adjusted in the drawing tank (7) along the nozzle opening (9) from the edges (90, 92) thereof to the centre of the nozzle opening (9).

## Revendications

**1.** Dispositif (1) destiné à la fabrication de rubans de verre (3) minces d'une épaisseur égale ou inférieure à 3 000 $\mu$m, à partir de verre en fusion (5), comprenant un réservoir d'étirage (7), le réservoir d'étirage (7) présentant un orifice de buse (9) allongé inférieur, à travers lequel le verre en fusion (5) peut sortir vers le bas, ainsi qu'un dispositif de chauffage direct (2) et un dispositif de chauffage indirect (4), le dispositif de chauffage direct (2) comportant au moins un circuit de chauffage (206, 207, 208, 209) qui permet de chauffer au moins une région du réservoir d'étirage (7) sous la forme d'au moins une première zone de chauffage (34, 35, 36, 37), le dispositif de chauffage direct (2) comportant pour chaque circuit de chauffage (206, 207, 208, 209) une source de courant (201, 202, 203, 204), chaque circuit de chauffage (206, 207, 208, 209) présentant des bornes de raccordement (26, 27) par laquelle

chaque circuit de chauffage (206, 207, 208, 209) est raccordé à une paroi (700) du réservoir d'étirage (7), de sorte que le courant de la source de courant (201, 202, 203, 204) passe respectivement à travers au moins une partie de la paroi (700) et chauffe la paroi (700), et chaque circuit de chauffage (206, 207, 208, 209) du chauffage direct comprenant des parties, traversées par le courant, de la paroi (700) du réservoir d'étirage (7), et le dispositif de chauffage indirect (4) présentant des éléments chauffants (41, 42, 43, 44, 45, 46) pour au moins une deuxième zone de chauffage (61, 62, 63, 64, 65, 66), et le dispositif de chauffage direct (2) présentant plusieurs circuits de chauffage (206, 207, 208, 209) pour former plusieurs premières zones de chauffage (34, 35, 36, 37), **caractérisé en ce que** plusieurs points de mesure de température (18, 19) sont soudés au réservoir d'étirage (7).

**2.** Dispositif (1) selon la revendication précédente, **caractérisé en ce que** le dispositif de chauffage direct (2) comprend au moins quatre circuits de chauffage (206, 207, 208, 209) qui peuvent être réglés indépendamment les uns des autres et permettent de chauffer quatre régions différentes du réservoir d'étirage (7), sous la forme de quatre premières zones de chauffage (34, 35, 36, 37), le dispositif de chauffage direct (2) présentant pour chacun des quatre circuits de chauffage des bornes (26, 27) par l'intermédiaire desquelles les circuits de chauffage (206, 207, 208, 209) son raccordés à la paroi (700) du réservoir d'étirage (7).

**3.** Dispositif (1) selon une des revendications précédentes, **caractérisé en ce que** le dispositif de chauffage indirect (4) présente des éléments chauffants (41, 42, 43, 44, 45, 46) pour au moins trois, de préférence pour au moins cinq ou plus de deuxièmes zones de chauffage (61, 62, 63, 64, 65, 66) différentes dans l'espace les unes par rapport aux autres et pouvant être réglées indépendamment les unes des autres.

**4.** Dispositif (1) selon la revendication précédente, **caractérisé en ce que** les premières zones de chauffage (34, 35, 36, 37) du dispositif de chauffage direct (2) et les deuxièmes zones de chauffage (61, 62, 63, 64, 65, 66) du dispositif de chauffage indirect (4) sont disposées en étant réparties verticalement et/ou horizontalement autour du réservoir d'étirage (7) et sur celui-ci.

**5.** Dispositif (1) selon une des revendications précédentes, **caractérisé en ce que** pour le chauffage direct, les courants de chauffage appliqués à des tôles (78) du réservoir d'étirage (7) sont inférieurs à 2 500 A, de préférence inférieurs à 1 000 A, et/ou que le dispositif de chauffage indirect (4) est agencé de manière à ce qu'il contribue en tant que charge de base pour plus de 50 % à la puissance totale.

**6.** Dispositif (1) selon une des revendications précédentes, **caractérisé en ce que** le réservoir d'étirage (7) comprend des brides ou des manchons (28) en tant que bornes (26, 27) pour le courant destiné au chauffage direct.

**7.** Dispositif (1) selon une des revendications précédentes, **caractérisé en ce qu'**il est prévu au moins deux éléments de mesure de température (18, 19) qui constituent des points de mesure de régulation en vue de la régulation de la puissance de chauffage du dispositif de chauffage direct (2) ou du dispositif de chauffage indirect (4), pour un dispositif de régulation (20) destiné à la régulation de la puissance de chauffage.

**8.** Dispositif (1) selon une des revendications précédentes, **caractérisé en ce que** les éléments chauffants (41, 42, 43, 44, 45, 46) du dispositif de chauffage indirect (4) comportent du platine, de l'acier inoxydable ou du SiC, en tant que matériau de chauffage par résistance, et/ou des carreaux chauffants ou des chauffages à méandres.

**9.** Dispositif (1) selon une des revendications précédentes, **caractérisé en ce que** le réservoir d'étirage (7) comporte des tôles (78) avec au moins un métal précieux à grains fins stabilisés ou un alliage de métaux précieux à grains fins stabilisés, et le métal précieux à grains fins stabilisés présentant de préférence au moins l'une des caractéristiques suivantes :

- le métal précieux à grains fins stabilisés est l'un des métaux Pt, PtRh, PtAu, PtRhAu, PtIr,
- le métal précieux à grains fins stabilisés contient des nanoparticules, telles que des particules de $ZrO_2$.

**10.** Dispositif (1) selon une des revendications précédentes, **caractérisé en ce qu'**en amont du réservoir d'étirage (7), il est prévu une arrivée (74), et dans lequel l'arrivée (74) débouche dans un tube de distribution (76) du réservoir d'étirage (7), auquel se raccorde un compartiment (75), le compartiment (75) ayant une section transversale plus étroite que le tube de distribution (76) et présentant l'orifice de buse (9) à son extrémité inférieure.

**11.** Dispositif (1) selon une des revendications précédentes, **caractérisé en ce que** les sources de courant (201, 202, 203, 204) sont raccordées au réservoir d'étirage (7) de manière à former au moins trois premières zones de chauffage

(34, 35, 36) qui sont réparties dans la partie supérieure du réservoir d'étirage (7), transversalement à la direction d'étirage du ruban de verre (3), l'une des premières zones de chauffage (35) étant de préférence placée au milieu, et une autre première zone de chauffage (37) chauffant la partie inférieure du réservoir d'étirage (7) qui comporte l'orifice de buse (9).

**12.** Dispositif (1) selon une des revendications précédentes, **caractérisé en ce que** le réservoir d'étirage (7) présente un corps de guidage (11) qui dépasse vers le bas à partir de l'orifice de buse (9) du réservoir d'étirage (7), le corps de guidage (11) étant fixé à distance des bords (90, 92) de l'orifice de buse (9), de sorte que deux fentes de buse (94, 96) sont formées entre le corps de guidage (11) et les bords (90, 92) de l'orifice de buse (9), et le corps de guidage (11) étant chauffé, sachant que le corps de guidage (11) présente des bornes de raccordement distincts, pouvant être réglés séparément, et qu'au moins un circuit de chauffage indépendant du réservoir d'étirage (7) est formé.

**13.** Procédé de fabrication de rubans de verre (3) minces d'une épaisseur égale ou inférieure à 3 000 $\mu$m, avec un dispositif (1) selon une des revendications précédentes, selon lequel le verre en fusion (5) et acheminé au réservoir d'étirage (7) via une arrivée (74), et le verre en fusion (5) sort de l'orifice de buse (9) et est étiré en formant le ruban de verre (3), sachant que le réservoir d'étirage (7) est chauffé simultanément aussi bien avec le dispositif de chauffage direct (2) qu'avec le dispositif de chauffage indirect (4).

**14.** Procédé selon la revendication précédente, **caractérisé en ce que** le verre en fusion (5) est réparti par l'arrivée (74) du réservoir d'étirage (7), dans un tube de distribution (76) du réservoir d'étirage (7), auquel se raccorde un compartiment (75), le compartiment (75) ayant une section transversale plus étroite que le tube de distribution (76), la variation de la température dans le réservoir d'étirage (7) servant à régler un débit linéaire uniforme du verre en fusion (5), le long de l'orifice de buse (9).

**15.** Procédé selon une des revendications précédentes, **caractérisé en ce que** le réservoir d'étirage (7) comprend un compartiment (75) dans lequel est placé un corps de guidage (11) et qui présente l'orifice de buse (9) à son extrémité inférieure, la température du verre en fusion (5) dans le réservoir d'étirage (7) étant réglée de manière à ce que la relation suivante soit établie avec sa viscosité qui dépend de la température :

$$48\frac{\acute{\upsilon}}{B}\int_{\mathrm{H_L}}\frac{\eta}{(\mathrm{D_S}-\mathrm{D_L})^3}dz+12\frac{\acute{\upsilon}}{B}\int_{\mathrm{H_S}}\frac{\eta}{\mathrm{D_S^3}}\mathrm{d}z>\rho\cdot\mathrm{g}\cdot\mathrm{h}-p_u$$

où $\acute{\upsilon}$ désigne le débit volumique du verre en fusion, B désigne la largeur du réservoir d'étirage (7) dans le sens longeant l'orifice de buse (9), Ds désigne la largeur locale du compartiment (75), $D_L$ désigne l'épaisseur locale du corps de guidage (11), $\rho$ désigne la densité du verre en fusion, g l'accélération de la pesanteur, h la hauteur du compartiment (75) et $p_u$ une pression de 2 000 Pa.

**16.** Procédé selon une des revendications précédentes, **caractérisé en ce que** l'on règle dans le réservoir d'étirage (7), le long de l'orifice de buse (9), depuis ses bords (90, 92) jusqu'au milieu de l'orifice de buse (9), un gradient de température de $T_{grad}=T_{milieu}-T_{bord}=0$ à 50 K, de préférence de $T_{grad}=$ 20 à 40 K.

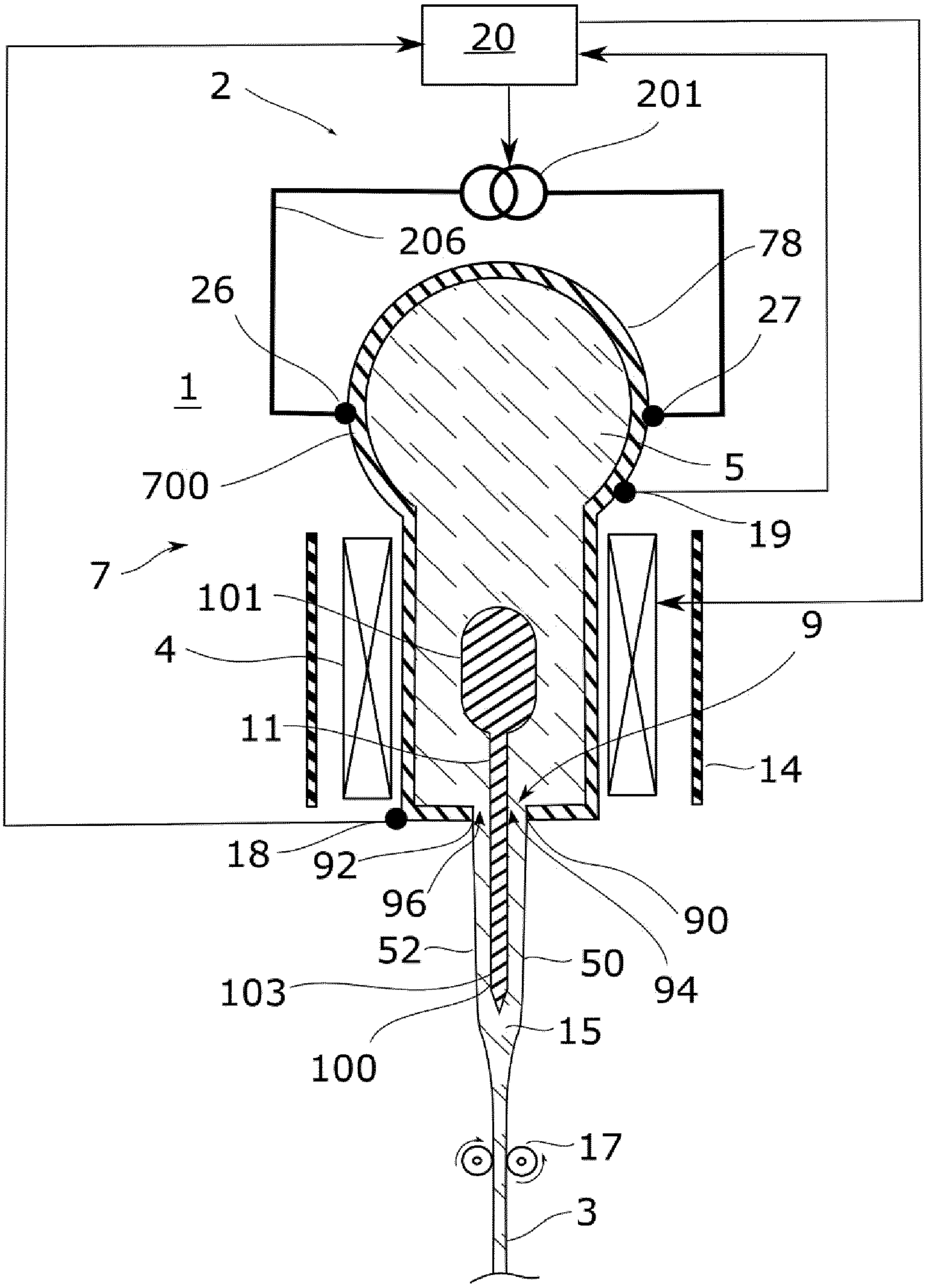
20
2
201
206
78
26
27
1
5
700
19
7
101
9
4
11
14
18
92
96
90
52
50
94
103
15
100
17
3

Fig. 1

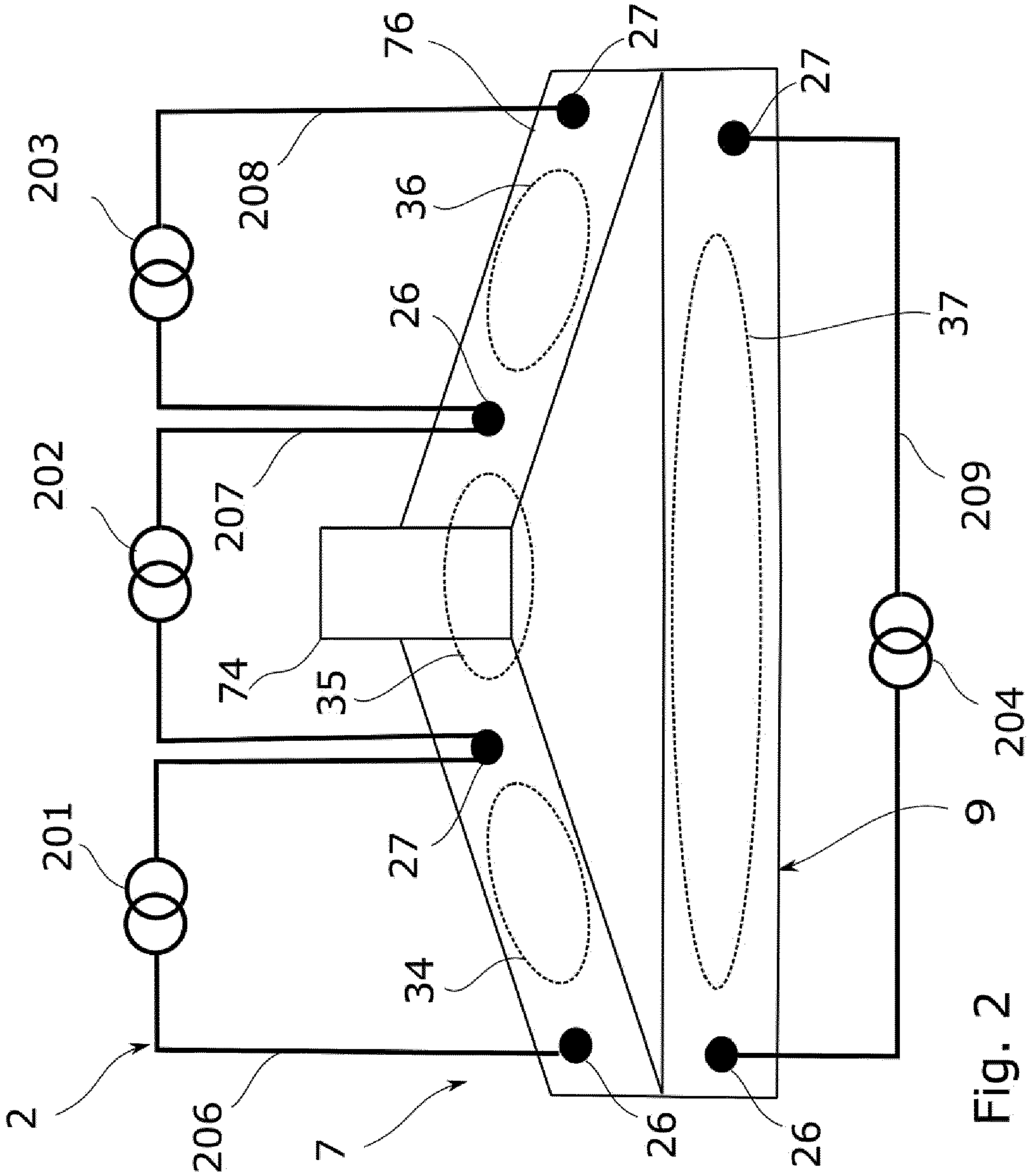
2
206
7
26
26
201
27
34
202
207
74
35
203
208
36
26
76
27
27
37
209
204
9

Fig. 2

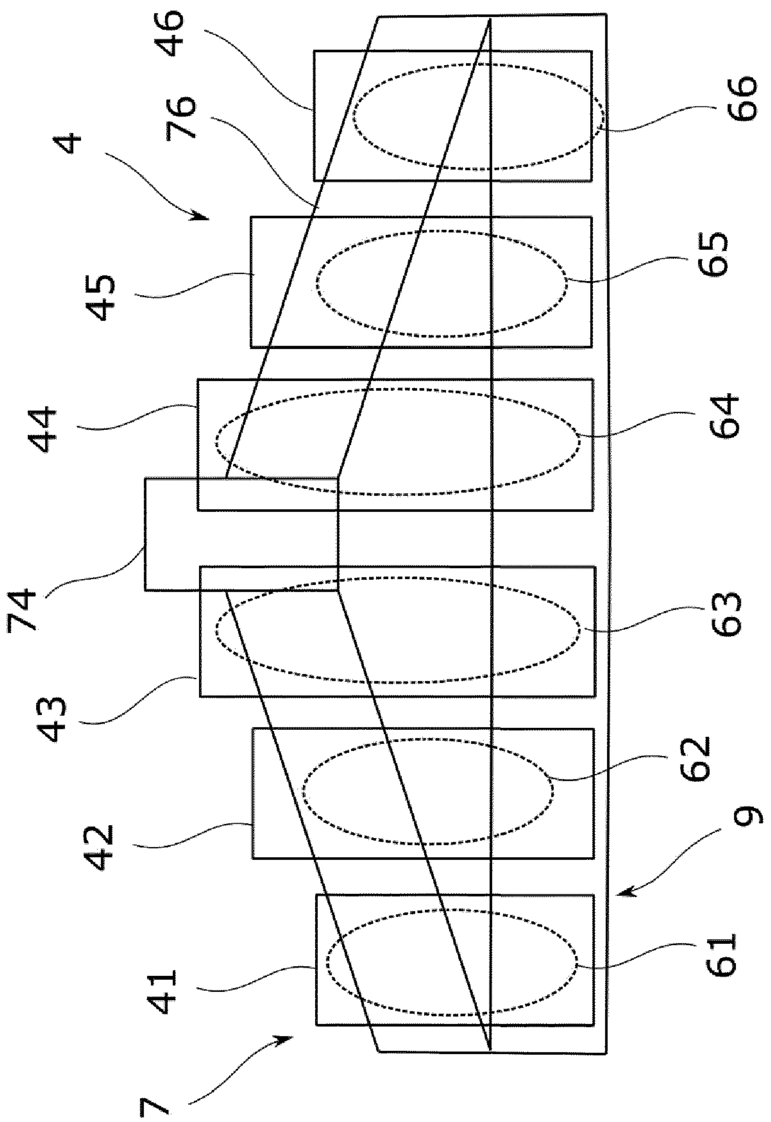


Fig. 3

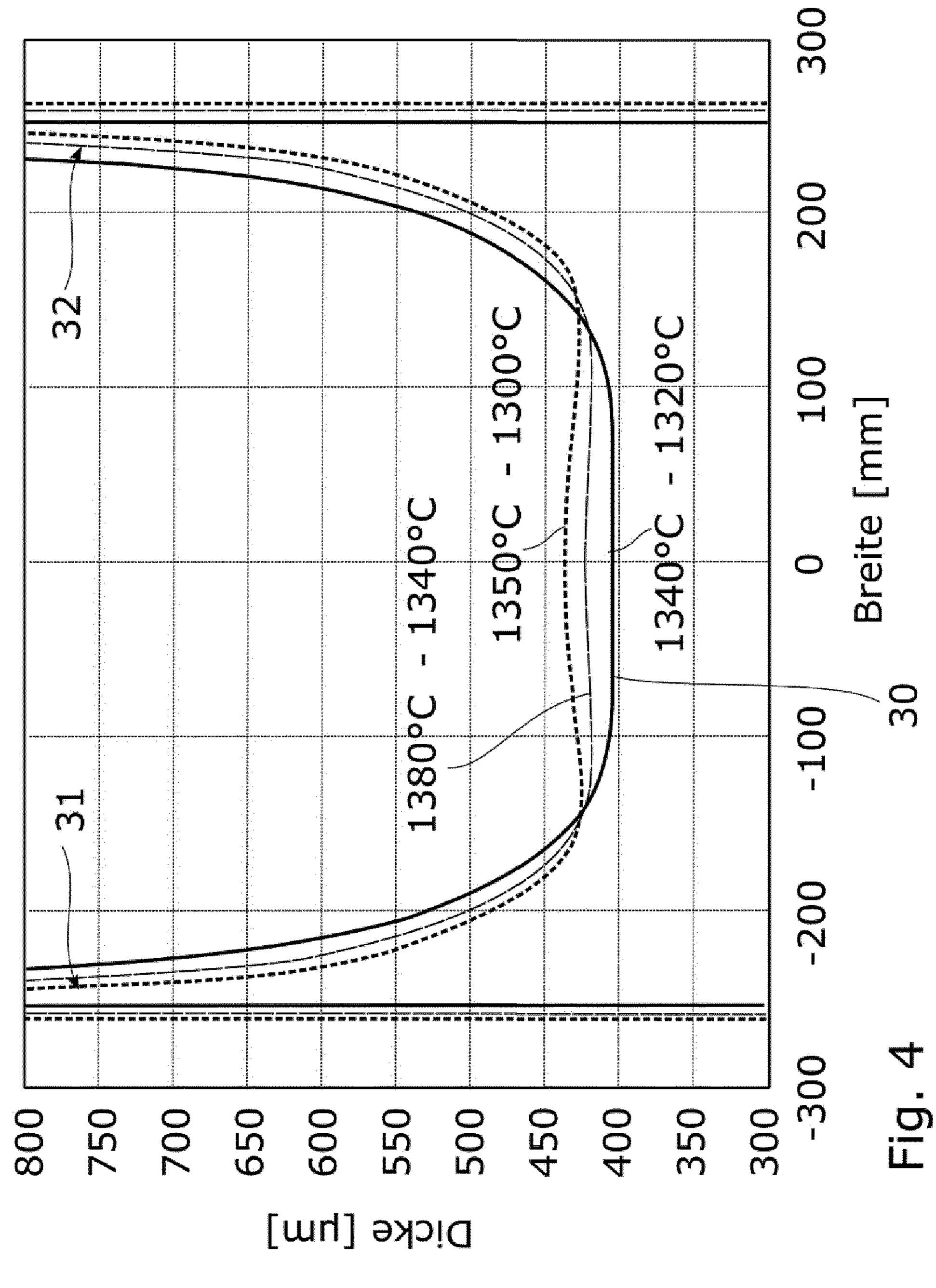

800
750
700
650
600
550
500
450
400
350
300
Dicke [µm]
-300
-200
-100
0
100
200
300
Breite [mm]
31
32
30
1380°C - 1340°C
1350°C - 1300°C
1340°C - 1320°C


Fig. 4

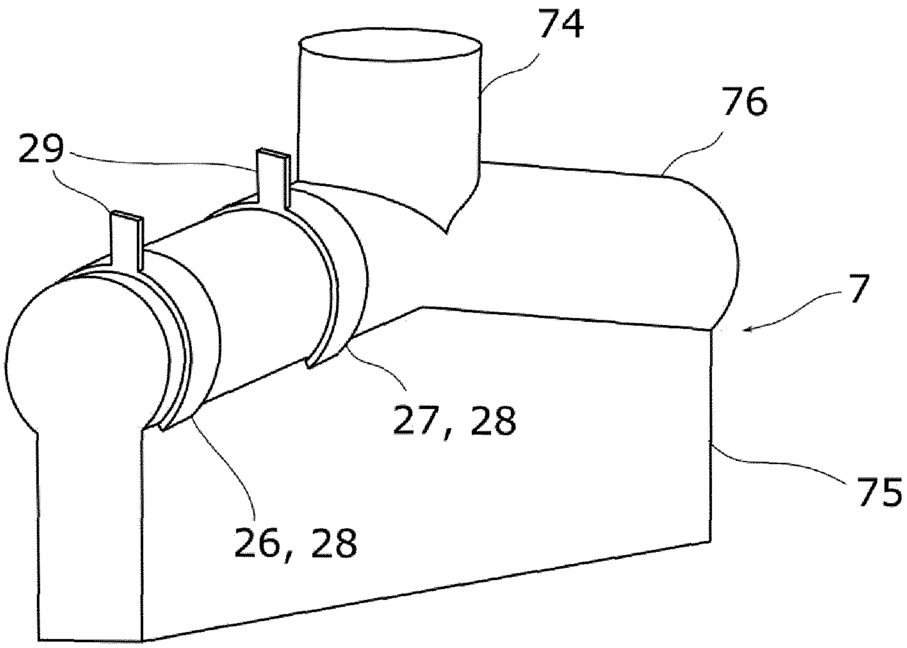


Fig. 5

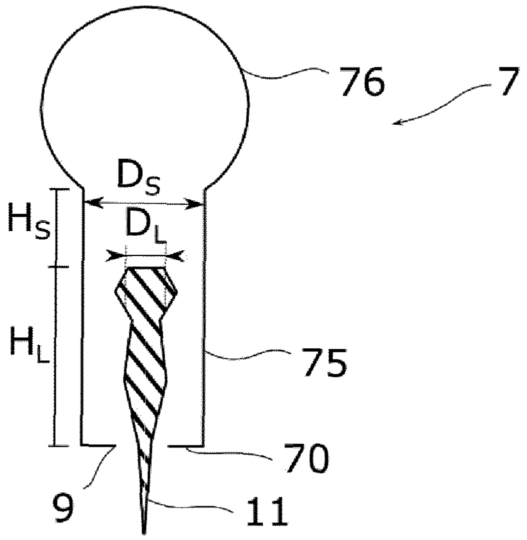


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004007560 B4
- DE 10064977 C1
- DE 1596484 B1